# EUROPÄISCHE PATENTSCHRIFT

(11) **EP 3 207 838 B1**
(45) Veröffentlichungstag und Bekanntmachung des Hinweises auf die Patenterteilung: **05.12.2018**
(21) Anmeldenummer: 17155199.7
(22) Anmeldetag: 08.02.2017
(51) Int. Cl.: A47J 31/44

(54) **HEISSGETRÄNKEZUBEREITUNGSVORRICHTUNG, INSBESONDERE KAFFEEVOLLAUTOMAT**
HOT BEVERAGE PREPARATION DEVICE, IN PARTICULAR A FULLY AUTOMATIC COFFEE MAKER
DISPOSITIF DE PRÉPARATION DE BOISSONS CHAUDES, EN PARTICULIER MACHINE À CAFÉ ENTIÈREMENT AUTOMATIQUE

(30) Priorität: 19.02.2016 DE 102016202631
(43) Veröffentlichungstag der Anmeldung: 23.08.2017
(73) Patentinhaber: BSH Hausgeräte GmbH, 81739 München (DE)
(72) Erfinder: Kirschner, Andreas, 83301 Traunreut (DE); Koch, Franz, 83454 Anger (DE)

(56) Entgegenhaltungen:
- EP-A1- 0 783 859

## Beschreibung

Die Erfindung betrifft eine Heißgetränkezubereitungsvorrichtung, insbesondere einen Kaffeevollautomaten für Haushaltszwecke, mit welchem Heißgetränke oder heiße flüssige Lebensmittel, wie beispielsweise Kaffee, Tee, heiße Milch, Kakaogetränke oder auch Suppen zubereitet werden können. Nachfolgend werden die Begriffe "Heißgetränkezubereitungsvorrichtung", "Kaffeemaschine" und "Zubereitungsvorrichtung" gleichbedeutend benutzt, so dass einer dieser Begriffe stets den anderen beinhaltet und sie daher gegeneinander austauschbar sind.

Bei Kaffeevollautomaten kann es notwendig sein, Elemente vom Kaffeevollautomaten ab- oder ihm zu entnehmen, um sie z. B. zu reinigen. Die DE 10 2009 034 234 B4 zeigt z. B. einen abnehmbaren Michbehälter für eine Milchschäumeinrichtung eines Getränkeautomaten, der über eine Spülvorrichtung verfügt. Ein Ventil verhindert ein Eindringen von Spülmedium bei angebrachtem Michbehälter. Die EP-A-0 783 859 (siehe Fig. 2) zeigt einen Kaffeevollautomat mit einem schwenkbar beweglichen Abdeckelement, welches eine Serviceposition und eine Betriebsposition aufweist und an welchem ein Getränkeauslass und ein Fluidkoppelelement angebracht sind.

Aufgabe der vorliegenden Erfindung ist es, das Auslaufen von Flüssigkeiten beim Öffnen des Kaffeevollautomaten zu unterbinden.

Diese Aufgabe wird erfindungsgemäß durch eine Heißgetränkezubereitungsvorrichtung mit den Merkmalen des unabhängigen Patentanspruchs 1 gelöst. Demgemäß ist eine Heißgetränkezubereitungsvorrichtung, insbesondere ein Kaffeevollautomat, mit einem beweglichen Abdeckelement vorgesehen, welches eine Serviceposition und eine Betriebsposition aufweist und an welchem ein Getränkeauslass und ein Fluidkoppelelement angebracht sind. Das Fluidkoppelelement stellt eine fluidische Schnittstelle zwischen einer Brüheinheit der Zubereitungsvorrichtung und dem Getränkeauslass dar. Ferner ist eine Verschlusseinrichtung vorgesehen, welche beim Öffnen des Abdeckelements eine Fluidverbindung zwischen dem Fluidkoppelement und dem Getränkeauslass verschließt. Das Öffnen kann z. B. ein manuelles Entriegeln, also z. B. das Bewegen eines Verschlussbügels oder -riegels, beinhalten oder allein ein Bewegen des Abdeckelements von der Betriebsposition in die Serviceposition bedeuten.

Dabei schließt das Verschließen der Fluidverbindung zwischen dem Fluidkoppelement und dem Getränkeauslass auch das Verschließen Fluidkoppelements und/oder des Getränkeauslasses selbst ein.

Die Heißgetränkezubereitungsvorrichtung kann beispielsweise ein Kapselautomat, eine Kaffeepadmaschine, vorzugsweise aber ein Kaffeevollautomat mit einer Mahl- und Brüheinrichtung sein. Bei dem Abdeckelement kann es sich grundsätzlich um so gut wie jede benutzerseitig bedienbare Abdeckung einer Serviceöffnung in der Außenwand des Gehäuses handeln, also beispielsweise um eine Service- oder Gerätetür. Die Betriebsposition bezeichnet diejenige Position des Abdeckelements, in welcher die Heißgetränkezubereitungsvorrichtung betriebsbereit ist, also insbesondere ein Getränkebezug möglich ist. Handelt ist sich bei dem beweglichen Element z. B. um eine Servicetüre, befindet sich die Servicetüre in der Betriebsposition, wenn sie geschlossen ist. Die Serviceposition bezeichnet dagegen jene Position des Abdeckelements, in welcher kein Getränkebezug möglich ist oder sein soll, weil das Gehäuse z. B. zum Reinigen der Heißgetränkezubereitungsvorrichtung geöffnet ist. Die Serviceposition ermöglicht einen Zugriff auf das Innere der Heißgetränkezubereitungsvorrichtung, sodass z. B. die Brüheinheit entnommen, gereinigt und wieder eingesetzt werden kann.

Insbesondere bei Einbaukaffeemaschinen, aber auch gelegentlich bei einzeln stehenden Geräten befinden sich die Serviceöffnung und die Servicetür an der benutzerseitig unmittelbar zugänglichen und ihm zugewandten Frontseite der Heißgetränkezubereitungsvorrichtung. Dort wird das gebrühte Heißgetränk regelmäßig über den Getränkeauslauf ausgegeben, der an oder in der Servicetüre angeordnet ist. Wird die Servicetüre geöffnet, können die Fluidwege von der Brüheinheit zum Auslauf unterbrochen bzw. entkoppelt werden, um eine einfache Betätigung der Brüheinheit zu ermöglichen. Damit kann eine Belüftung der Fluidwege einhergehen. Nach einem Brühvorgang kann sich insbesondere Kaffee in dem Fluidweg zwischen der Brüheinheit und dem Getränkeauslauf bzw. dem Koppelelement zwischen der Brüheinheit und dem Getränkeauslauf befinden - jedenfalls solange der Kaffee nicht in einem offenen System z. B. über Rampen geführt wird, sondern in einem geschlossenen System in Schläuchen läuft. Wird die Servicetüre nach einem Brühvorgang geöffnet und der Fluidweg unterbrochen, kann die Flüssigkeit aus dem Getränkeauslauf austreten und zu Verunreinigungen führen. Um sie zu vermeiden, ist bei der vorliegenden Erfindung das Verschlusselement vorgesehen, das in der Serviceposition des Abdeckelements den Getränkeauslauf direkt, nämlich ihn selbst, oder indirekt, nämlich den Fluidweg bis zu ihm hin, verschließt. Damit kann keine Flüssigkeit mehr austreten, wenn sich das Abdeckelement in der Serviceposition befindet.

Weitere, besonders vorteilhafte Ausgestaltungen und Weiterbildungen der Erfindung ergeben sich aus den abhängigen Ansprüchen sowie der nachfolgenden Beschreibung, wobei die Merkmale verschiedener Ausführungsbeispiele zu neuen Ausführungsbeispielen kombiniert werden können.

In einer Ausführungsform kann die Verschlusseinrichtung als Absperrorgan z. B. als Absperrschieber, Kugelhahn oder schwenkbare Absperrklappe ausgebildet sein, die zwischen der Kupplung und dem Fluidauslass angebracht sind. Ein solches Absperrorgan kann vorzugsweise z. B. kinematisch mit dem Abdeckelement gekoppelt sein und zusammen mit der Bewegung des Abdeckelements und damit für den Benutzer unbemerkt betätigt, also bei dessen Schließen geöffnet bzw. beim Öffnen des Abdeckelements geschlossen werden. In einer weiteren, einfachen Ausführungsform kann die Verschlusseinrichtung als ein Schlauch ausgebildet sein, der beim Öffnen des Abdeckelements geknickt oder gequetscht wird. Weil das Verschlusselement vom Benutzer unbemerkt betätigt wird, vereinfacht es die Betätigung der Zubereitungsvorrichtung.

In einer vorteilhaften Ausführungsform kann das Fluidkoppelelement eine Kupplung und einen Fluidauslass aufweisen, der mit dem Getränkeauslass fluidisch gekoppelt ist. Ferner kann eine Brüheinheit in der Heißgetränkezubereitungsvorrichtung vorgesehen sein, welche ein Eingriffselement aufweist, welches nur in der Betriebsposition des Abdeckelements in die Kupplung eingreift, um z. B. ein gebrühtes Heißgetränkt aus der Brüheinheit in das Fluidkoppelelement und von dort zum Getränkeauslauf zu leiten. In der Serviceposition des Abdeckelements greift es folglich nicht in die Kupplung ein, sondern ist von ihr jedenfalls fluidisch getrennt. Die Verschlusseinrichtung kann als Ventil in dem Fluidkoppelelement ausgebildet sein und ein Federelement und ein Verschlusselement aufweisen, welche auf der in der Betriebsposition des Abdeckelements der Brüheinheit gegenüberliegenden Seite der Kupplung angeordnet sind, wobei das Federelement das Verschlusselement gegen die Kupplung vorspannt Das Verschlusselement liegt also von der Brüheinheit aus gesehen im Inneren des Fluidkoppelelements bzw. hinter der Kupplung. Wenn sich das Eingriffselement nicht im Eingriff mit der Kupplung befindet, wird das Verschlusselement folglich durch die Federkraft des Federelements aus dem Inneren des Koppelelements gegen die Kupplung gedrückt und verschließt diese damit einlaufseitig. Durch diese einfache mechanische Konstruktion wird eine Belüftung des Inneren des Fluidkoppelelements unterbunden und ein Auslaufen von Flüssigkeit aus dem Fluidauslass und der Kupplung kann effektiv vermieden werden. Ferner wird ebenfalls ein Rückfluss von Flüssigkeit aus dem Fluidkoppelelement verhindert.

In einer Ausführungsform kann die Heißgetränkezubereitungsvorrichtung ein Dichtungselement, z. B. einem O-Ring, aufweisen, welches an der Kupplung zwischen der Kupplung und dem Verschlusselement angeordnet ist und die Kupplung gegen das Verschlusselement abdichtet, wenn sich das Eingriffselement nicht im Eingriff mit der Kupplung befindet. Durch ein einfaches Dichtungselement, wie einen O-Ring, wird die Verbindung zwischen Kupplung und Verschlusselement effektiv abgedichtet. Gleichzeitig kann das Dichtungselement die Kupplung auch gegen das Eingriffselement abdichten, wenn sich das Eingriffselement im Eingriff mit der Kupplung befindet.

In einer Ausführungsform kann das Eingriffselement eine Stirnfläche aufweisen, welche beim Bewegen des Abdeckelements von der Serviceposition in die Betriebsposition das Verschlusselement entgegen der Federkraft des Federelements bewegt. Durch die Stirnfläche wird das Verschlusselement bei der Bewegung des Abdeckelements automatisch von der Kupplung weg bewegt bzw. gedrückt und die fluidische Verbindung zwischen Brüheinheit und Fluidkoppelelement wird hergestellt.

In einer Ausführungsform kann das Eingriffselement hinter der Stirnfläche eine radiale Fluidaustrittsöffnung und einen an diese angeschlossenen Fluidkanal aufweisen. Die radiale Fluidaustrittsöffnung ermöglicht ein ungebremstes Ausströmen der Flüssigkeit auch dann, wenn die Stirnfläche und das Verschlusselement durch das Federelement aufeinandergepresst werden. Der Fluidkanal kann dabei die Fluidaustrittsöffnung z. B. fluidisch mit einer Brühkammer der Brüheinheit verbinden, aus der nach dem Brühvorgang das Heißgetränkt in das Fluidkoppelelement befördert werden soll.

Die Fluidaustrittsöffnung kann von der Kupplung aus gesehen hinter dem Verschlusselement liegen. Die Flüssigkeit, die durch das Eingriffselement in das Innere des Fluidkoppelelements gelangt, muss folglich um das Verschlusselement herumgeführt werden. In einer Ausführungsform kann daher das Fluidkoppelelement eine Fluidführungsausnehmung aufweisen, welche im Eingriff mit dem Eingriffselement das Fluid von der Fluidaustrittsöffnung zu einem Fluidauslass des Fluidkoppelelements führt. Dies wird durch die Fluidführungsausnehmung mit einfachen Mitteln ermöglicht.

In einer Ausführungsform kann die Fluidführungsausnehmung in einer Innenwand eines Innenraums des Fluidkoppelelements angeordnet sein, wobei das Federelement und das Verschlusselement in dem Innenraum angeordnet sein können. Eine einfache Ausnehmung in der Innenwand kann sehr einfach hergestellt werden und ermöglicht bereits effektiv das Leiten der Flüssigkeit um das Verschlusselement herum.

In einer Ausführungsform weist die Heißgetränkezubereitungsvorrichtung eine als Kanal ausgebildete Fluidführungsausnehmung auf, wobei der Kanal im Eingriff des Eingriffselements mit der Kupplung die Fluidaustrittsöffnung direkt mit dem Fluidauslass verbindet. Durch den erfindungsgemäßen Kanal kann die Fluidaustrittsöffnung direkt mit dem Fluidauslass verbunden werden und das Federelement und das Verschlusselement geraten nicht mit der Flüssigkeit in Kontakt.

Das Prinzip der Erfindung wird im Folgenden unter Hinweis auf die beigefügten Figuren beispielshalber noch näher erläutert. Dabei sind in den verschiedenen Figuren gleiche Komponenten mit identischen Bezugsziffern versehen. Es zeigen:
- Figur 1:: eine Schnittansicht einer Ausführungsform eines erfindungsgemäßen Fluidkoppelelements;
- Figur 2:: eine ausschnittsweise Schnittansicht einer Ausführungsform einer erfindungsgemäßen Heißgetränkezubereitungsvorrichtung bei geöffneter Servicetüre; und
- Figur 3:: eine ausschnittsweise Schnittansicht der Ausführungsform der erfindungsgemäßen Heißgetränkezubereitungsvorrichtung der Figur 1 bei geschlossener Servicetüre.

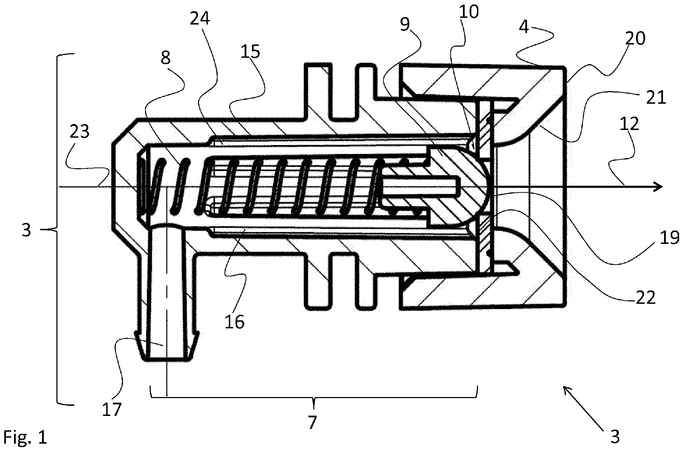

Das Fluidkoppelelement 3 der Figur 1 kann z. B. in einer Servicetüre 2 einer Heißgetränkezubereitungsvorrichtung 1 angeordnet werden, um eine fluidische Verbindung zwischen einer Brüheinheit 5 von der lediglich ein Eingriffselement 6 dargestellt ist und einem Heißgetränkeauslass (nicht dargestellt) der Heißgetränkezubereitungsvorrichtung 1 herzustellen. Das Fluidkoppelelement 3 weist dazu ein Ventil 7 auf, welches das Herauslaufen bzw. Auslaufen von Flüssigkeit verhindert, wenn die Servicetüre 2 geöffnet wird und dadurch die fluidische Verbindung zwischen Brühkammer 5 und Fluidkoppelelement 3 unterbrochen wird.

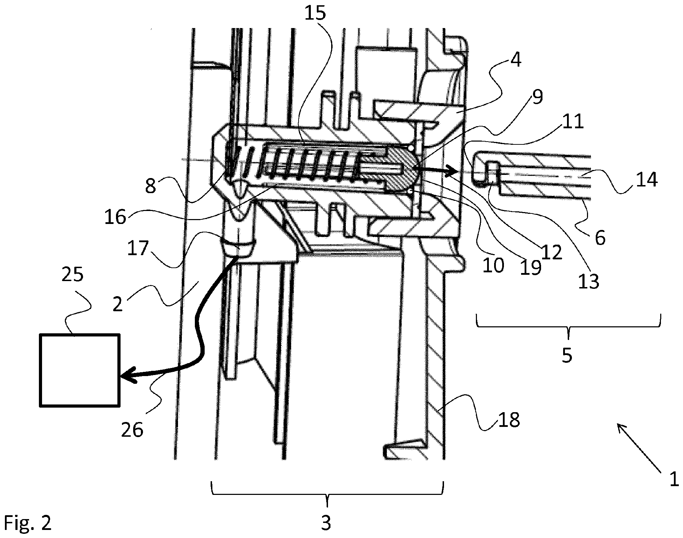

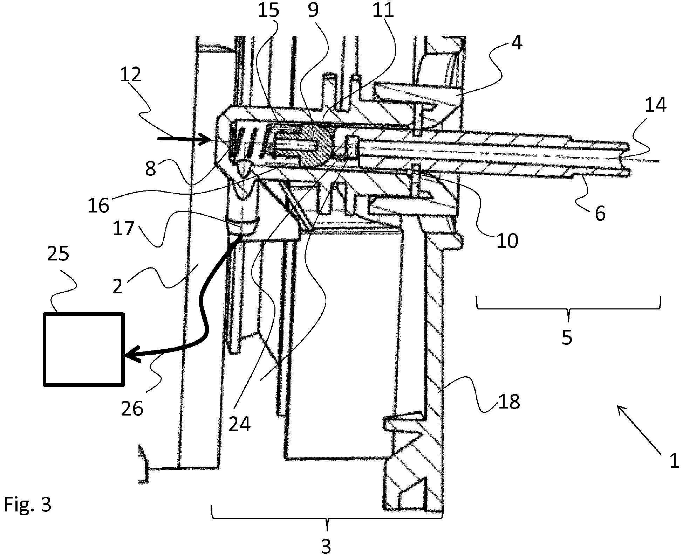

Das Ventil 7 wird dabei durch eine Kupplung 4 in Verbindung mit einem Verschlusselement 9 und einer Feder 8 gebildet. Die Kupplung 4 weist in einer Aufsicht auf die Schnittachse bzw. ihre Mittelachse 23 eine runde Außenkontur und eine Fluidöffnung 19 in ihrer Mitte bzw. zentriert auf ihrer Mittelachse 23 auf. Ferner weist die Kupplung 4 im Querschnitt an ihrer Eingangsseite 20, also derjenigen Seite, die in Richtung der Brüheinheit 5 zeigt (siehe Fig. 2) eine trichterförmige Innenkontur 21 auf, durch welche sich die Kupplung 4 zu der Fluidöffnung 19 hin verjüngt. Durch die trichterartige Form wird das Eingriffselement 6 (siehe Figuren 2 und 3) beim Schließen der Servicetüre automatisch zentriert. Auf ihrer Innenseite, also auf der zu dem Verschlusselement 9 zeigenden Seite, weist die Kupplung 4 eine zu der Mittelachse 23 orthogonale und ringförmig um die Fluidöffnung 19 verlaufende Fläche 22 auf, die als Gegenlager für das Verschlusselement 9 dient, welches von der Feder 8 mit einer vorgegebenen Federkraft 12 auf die Fläche 22 gedrückt wird. Auf der Innenseite der Kupplung 4 ist zur besseren Abdichtung ferner ein O-Ring 10 um die Fluidöffnung 19 herum angeordnet.

Die Feder 8 und das Verschlusselement 9 befinden sich beide im Innenraum 24 des Fluidkoppelelements 3. An der Innenwand 15 im unteren Bereich des Innenraums 24 sind eine Mehrzahl von parallel verlaufenden und über den Umfang der Innenwand 15 verteilte Fluidführungsausnehmung 16 angeordnet, welche ein Fluid bei geöffnetem Ventil 7 (siehe Figur 3) um das Verschlusselement 9 herum zu dem Fluidauslass 17 leitet. Von dem Fluidauslass 17 kann das Fluid, z. B. Kaffee, zu einem Auslass (nicht dargestellt) der Heißgetränkezubereitungsvorrichtung 1 geführt werden.

In Figur 1 befindet sich das Ventil 7 in der geschlossenen Stellung, die Feder 8 ist also entspannt und das Verschlusselement 9 liegt dichtend auf dem O-Ring 10 bzw. dem inneren Umfang der Fluidöffnung 19 auf. In diesem Zustand findet keine Belüftung des Fluidkoppelelements 3 statt. Folglich können weder Luft und noch Flüssigkeiten durch die Fluidöffnung 19 ein- oder austreten.

In der lediglich ausschnittsweise dargestellten Heißgetränkezubereitungsvorrichtung 1 der Figur 2 ist das Fluidkoppelelement 3 in der Servicetüre 2 der Heißgetränkezubereitungsvorrichtung 1 angeordnet und auslassseitig über die Fluidverbindung 26 mit dem Getränkeauslass 25 gekoppelt. Die Servicetüre 2 befindet sich an der Front der Heißgetränkezubereitungsvorrichtung 1 und kann geöffnet werden, um z. B. die Brüheinheit 5 zum Reinigen zu entnehmen. Folglich wird das Fluidkoppelelement 3 gemeinsam mit der Servicetüre 2 und relativ zur Brüheinheit 5 bewegt, wenn die Servicetüre 2 geöffnet wird.

In Figur 2 ist die Servicetüre 2 einen Spalt breit geöffnet, befindet sich also nicht in der Betriebsposition. Das Ventil 7 befindet sich daher in der geschlossenen Stellung, wie bereits zu Figur 1 beschrieben. Der Kupplung 4 gegenüber befindet sich ein Eingriffselement 6 der Brüheinheit 5. Das Eingriffselement 6 ist fluidisch mit einer Brühkammer (nicht dargestellt) der Brüheinheit 5 gekoppelt sein, um ein gebrühtes Heißgetränk aus der Brühkammer in das Fluidkoppelelement 3 zu befördern.

Das Eingriffselement 6 weist eine Stirnfläche 11 auf, die beim Schließen der Servicetür 2 gegen das Verschlusselement 9 drückt und es beim weiteren Schließen der Servicetür 2 gegen die Feder 8 drückt. Bei dieser Bewegung wird das Ventil 7 folglich geöffnet und eine fluidische Verbindung wird zwischen dem Eingriffselement 6 und dem Innenraum 24 des Fluidkoppelelements 3 hergestellt.

Im Inneren des Eingriffselements 6 befindet sich ein Fluidkanal 14, durch den Flüssigkeiten transportiert werden können. Hinter der Stirnfläche 11 weist das Eingriffselement 6 eine Fluidaustrittsöffnung 13 auf, die radial nach unten aus dem Eingriffselement 6 heraus führt.

Beim Schießen der Servicetür 2 kommt die Stirnfläche 11 mit dem Verschlusselement 9 in Kontakt und drückt es auf die Feder 8, so dass sie komprimiert wird. Ein Austreten von Flüssigkeit aus dem Fluidkoppelelement 3 ist dabei lediglich solange möglich, wie die Fluidaustrittsöffnung 13 noch nicht durch die Fluidöffnung 19 hindurchgetreten ist. Da die Servicetüre üblicherweise aber zügig geschlossen wird, ist dieser Moment sehr kurz. Ferner wird dabei der Großteil der Fluidöffnung 19 bereits durch das Eingriffselement 6 verdeckt. Es kann also nur eine sehr geringe Menge an Flüssigkeit austreten.

In Figur 3 ist die Servicetüre 2 vollständig geschlossen und befindet sich in der Serviceposition. Folglich befindet sich das Eingriffselements 6 im Eingriff mit der Kupplung 4. Der Übergang von Eingriffselement 6 zu Kupplung 4 wird dabei durch den O-Ring 10 abgedichtet und das Eingriffselement 6 ragt in den Innenraum 24 des Fluidkoppelelements 3 hinein, sodass sich die Fluidaustrittsöffnung 13 innerhalb des Fluidkoppelelements 3 befindet. Das Verschlusselement 9 ist maximal in Richtung der Feder 8 verschoben und die Feder 8 damit maximal komprimiert.

Befindet sich das Eingriffselement 6 im Eingriff mit der Kupplung 4, kann folglich eine Flüssigkeit über den Fluidkanal 14 durch die Fluidaustrittsöffnung 13 in den Innenraum 24 des Fluidkoppelelements 3 und von dort über die Fluidführungsausnehmung 16 zu dem Fluidauslass 17 fließen.

Da es sich bei der vorhergehend detailliert beschriebenen Heißgetränkezubereitungsvorrichtung um ein Ausführungsbeispiel handelt, kann sie in üblicher Weise vom Fachmann in einem weiten Umfang modifiziert werden, ohne den Bereich der Erfindung zu verlassen. Beispielsweise kann das Verschlusselement 9 Kanäle in seiner Wandung aufweisen, die es der Flüssigkeit ermöglichen, von dem Eingriffselement 6 zu dem Fluidauslass 17 zu fließen. An der Innenwand 15 des Fluidkoppelelements 3 müssen bei dieser Ausführungsform keine Fluidführungsausnehmungen 16 angebracht werden. In einer weiteren Alternative kann z. B. auch ein Kanal in der Außenwand des Fluidkoppelelements 3 eingebettet werden, der den Fluidauslass 17 direkt mit der Fluidaustrittsöffnung 13 verbindet. Der Innenraum 24 des Fluidkoppelelements 3 und die Feder 8 kommen so nicht in Kontakt mit der jeweiligen Flüssigkeit und werden folglich auch nicht durch sie verunreinigt.

### Bezugszeichenliste

- 1: Heißgetränkezubereitungsvorrichtung
- 2: Abdeckelement
- 3: Fluidkoppelelement
- 4: Kupplung
- 5: Brüheinheit
- 6: Eingriffselement
- 7: Ventil
- 8: Federelement
- 9: Verschlusselement
- 10: Dichtungselement
- 11: Stirnfläche
- 12: Federkraft
- 13: Fluidaustrittsöffnung
- 14: Fluidkanal
- 15: Innenwand
- 16: Fluidführungsausnehmung
- 17: Fluidauslass
- 18: Gehäuse
- 19: Fluidöffnung
- 20: Eingangsseite
- 21: Innenkontur
- 22: Fläche
- 23: Mittelachse
- 24: Innenraum
- 25: Getränkeauslass
- 26: Fluidverbindung

## Patentansprüche

1. Heißgetränkezubereitungsvorrichtung (1), insbesondere Kaffeevollautomat,
- mit einem beweglichen Abdeckelement (2), welches eine Serviceposition und eine Betriebsposition aufweist und an welchem ein Getränkeauslass (25) und ein Fluidkoppelelement (3) angebracht sind, **gekennzeichnet durch**
- eine Verschlusseinrichtung (7), welche beim Öffnen des Abdeckelements eine Fluidverbindung (26) zwischen dem Fluidkoppelement (3) und dem Getränkeauslass (25) verschließt.

2. Heißgetränkezubereitungsvorrichtung (1) nach Anspruch 1 mit einer Brüheinheit (5), wobei das Fluidkoppelelement (3) eine Kupplung (4) und einen Fluidauslass (17) aufweist, der mit dem Getränkeauslass (25) fluidisch gekoppelt ist, und wobei die Brüheinheit (5) ein Eingriffselement (6) aufweist, welches nur in der Betriebsposition des Abdeckelements (2) in die Kupplung (4) eingreift, und wobei die Verschlusseinrichtung (7) als Ventil (7) in dem Fluidkoppelelement (3) mit einem Federelement (8) und einem Verschlusselement (9) ausgebildet ist, welche auf der in der Betriebsposition des Abdeckelements (2) der Brüheinheit (5) gegenüberliegenden Seite der Kupplung (4) angeordnet sind, wobei das Federelement (8) das Verschlusselement (9) gegen die Kupplung (4) vorspannt.

3. Heißgetränkezubereitungsvorrichtung (1) nach Anspruch 2, mit einem Dichtungselement (10), welches an der Kupplung (4) zwischen der Kupplung (4) und dem Verschlusselement (9) angeordnet ist und die Kupplung (4) gegen das Verschlusselement (9) abdichtet, wenn sich das Eingriffselement (6) nicht im Eingriff mit der Kupplung (4) befindet.

4. Heißgetränkezubereitungsvorrichtung (1) nach einem der vorherigen Ansprüche 2 und 3, wobei das Eingriffselement (6) eine Stirnfläche (11) aufweist, welche beim Bewegen des Abdeckelements (2) von der Serviceposition in die Betriebsposition das Verschlusselement (9) entgegen der Federkraft (12) des Federelements (8) bewegt.

5. Heißgetränkezubereitungsvorrichtung (1) nach Anspruch 4, wobei das Eingriffselement (6) hinter der Stirnfläche (11) eine radiale Fluidaustrittsöffnung (13) und einen an diese angeschlossenen Fluidkanal (14) aufweist.

6. Heißgetränkezubereitungsvorrichtung (1) nach Anspruch 5, wobei das Fluidkoppelelement (3) eine Fluidführungsausnehmung (16) aufweist, welche im Eingriff mit dem Eingriffselement (6) ein Fluid von der Fluidaustrittsöffnung (13) zu dem Fluidauslass (17) des Fluidkoppelelements (3) führt.

7. Heißgetränkezubereitungsvorrichtung (1) nach Anspruch 6, wobei das Federelement (8) und das Verschlusselement (9) in dem Innenraum angeordnet sind und die Fluidführungsausnehmung (16) in einer Innenwand (15) eines Innenraums des Fluidkoppelelements (3) angeordnet ist.

8. Heißgetränkezubereitungsvorrichtung (1) nach Anspruch 6, mit einer als Kanal ausgebildeten Fluidführungsausnehmung (16), der im Eingriff des Eingriffselements (6) mit der Kupplung (4) die Fluidaustrittsöffnung (13) direkt mit dem Fluidauslass (17) verbindet.

## Claims

1. Hot beverage preparation device (1), in particular a fully automatic coffee maker,
- having a movable cover element (2), which has a service position and an operating position and to which a beverage outlet (25) and a fluid coupling element (3) are attached, **characterised by**
- a closing device (7), which, when the cover element is opened, closes a fluid connection (26) between the fluid coupling element (3) and the beverage outlet (25).

2. Hot beverage preparation device (1) according to claim 1 having a brewing unit (5), wherein the fluid coupling element (3) has a coupling (4) and a fluid outlet (17), which is fluidically coupled to the beverage outlet (25), and wherein the brewing unit (5) has an engagement element (6), which only engages in the coupling (4) when the cover element (2) is in the operating position, and wherein the closing device (7) is embodied as a valve (7) in the fluid coupling element (3) with a spring element (8) and a closing element (9), which is arranged on the side of the coupling (4) facing the brewing unit (5) when the cover element (2) is in the operating position, wherein the spring element (8) clamps the closing element (9) against the coupling (4).

3. Hot beverage preparation device (1) according to claim 2, having a sealing element (10), which is arranged on the coupling (4) between the coupling (4) and the closing element (9) and seals the coupling (4) against the closing element (9) when the engagement element (6) is not in engagement with the coupling (4).

4. Hot beverage preparation device (1) according to one of the preceding claims 2 and 3, wherein the engagement element (6) has a front face (11), which, when the cover element (2) is moved from the service position into the operating position, moves the closing element (9) counter to the spring force (12) of the spring element (8).

5. Hot beverage preparation device (1) according to claim 4, wherein the engagement element (6) behind the front face (11) has a radial fluid exit opening (13) and a fluid duct (14) connected hereto.

6. Hot beverage preparation device (1) according to claim 5, wherein the fluid coupling element (3) has a fluid guide recess (16), which, in engagement with the engagement element (6), guides a fluid from the fluid exit opening (13) to the fluid outlet (17) of the fluid coupling element (3).

7. Hot beverage preparation device (1) according to claim 6, wherein the spring element (8) and the closing element (9) are arranged in the interior and the fluid guide recess (16) is arranged in an inner wall (15) of an interior of the fluid coupling element (3).

8. Hot beverage preparation device (1) according to claim 6, having a fluid guide recess (16) embodied as a duct, which, in engagement of the engagement element (6) with the coupling (4), connects the fluid exit opening (13) directly with the fluid outlet (17).

## Revendications

1. Dispositif de préparation de boissons chaudes (1), en particulier machine à café intégralement automatique,
- avec un élément de couverture mobile (2), lequel présente une position de maintenance et une position de fonctionnement et sur lequel une sortie de boisson (25) et un élément de couplage de fluides (3) sont apposés, **caractérisé par**
- un dispositif de fermeture (7) qui, lors de l'ouverture de l'élément de couvercle, coupe une liaison fluidique (26) entre l'élément de couplage de fluides (3) et la sortie de boisson (25).

2. Dispositif de préparation de boissons chaudes (1) selon la revendication 1 avec une unité d'échaudage (5), dans lequel l'élément de couplage de fluides (3) présente un accouplement (4) et une sortie de fluides (17) couplée fluidiquement à la sortie de boisson (25), et dans lequel l'unité d'échaudage (5) présente un élément d'engagement (6) qui s'engage dans l'accouplement (4) uniquement dans la position de fonctionnement de l'élément de couverture (2), et dans lequel le dispositif de fermeture (7) est exécuté sous la forme d'une soupape (7) dans l'élément de couplage de fluides (3) avec un élément à ressort (8) et un élément de fermeture (9), disposés sur le côté de l'accouplement (4) opposé à l'unité d'échaudage (5) en position de fonctionnement de l'élément de couverture (2), dans lequel l'élément à ressort (8) précontraint l'élément de fermeture (9) contre l'accouplement (4).

3. Dispositif de préparation de boissons chaudes (1) selon la revendication 2, avec un élément d'étanchéité (10) disposé sur l'accouplement (4) entre l'accouplement (4) et l'élément de fermeture (9) et qui étanchéifie l'accouplement (4) contre l'élément de fermeture (9), lorsque l'élément d'engagement (6) n'est pas engagé avec l'accouplement (4).

4. Dispositif de préparation de boissons chaudes (1) selon l'une des revendications précédentes 2 et 3, dans lequel l'élément d'engagement (6) présente une surface frontale (11) qui, lors du déplacement de l'élément de couverture (2) de la position de maintenance dans la position de fonctionnement, déplace l'élément de fermeture (9) contre la force de ressort (12) de l'élément à ressort (8).

5. Dispositif de préparation de boissons chaudes (1) selon la revendication 4, dans lequel l'élément d'engagement (6) présente, derrière la surface frontale (11), un orifice de sortie de fluide radial (13) et un conduit à fluide (14) y raccordé.

6. Dispositif de préparation de boissons chaudes (1) selon la revendication 5, dans lequel l'élément de couplage de fluides (3) présente un évidement de guidage de fluide (16) qui, en engagement avec l'élément d'engagement (6), mène un fluide de l'orifice de sortie de fluide (13) vers la sortie de fluides (17) de l'élément de couplage de fluides (3).

7. Dispositif de préparation de boissons chaudes (1) selon la revendication 6, dans lequel l'élément à ressort (8) et l'élément de fermeture (9) sont disposés dans l'espace intérieur et l'évidement de guidage de fluide (16) est disposé dans une paroi intérieure (15) d'un espace intérieur de l'élément de couplage de fluides (3).

8. Dispositif de préparation de boissons chaudes (1) selon la revendication 6, avec un évidement de guidage de fluide (16) exécuté en forme de conduit qui, en engagement de l'élément d'engagement (6) avec l'accouplement (4), relie l'orifice de sortie de fluides (13) directement à la sortie de fluides (17).
